# EUROPÄISCHE PATENTSCHRIFT

(11) **EP 1 736 810 B1**
(45) Veröffentlichungstag und Bekanntmachung des Hinweises auf die Patenterteilung: **23.12.2009**
(21) Anmeldenummer: 06012453.4
(22) Anmeldetag: 17.06.2006
(51) Int. Cl.: G02B 23/24, G02B 25/00, G02B 7/02

(54) **Justierbare Okulareinheit für Endoskope**
Adjustable eyepiece unit for endoscope
Unité oculaire ajustable pour endoscope

(30) Priorität: 24.06.2005 DE 102005029401
(43) Veröffentlichungstag der Anmeldung: 27.12.2006
(73) Patentinhaber: Karl Storz GmbH & Co. KG, 78532 Tuttlingen (DE)
(72) Erfinder: Dahmen, Jan, 78606 Seitingen-Oberflacht (DE); Höfig, Siegfried, 78570 Mühlheim (DE)
(74) Vertreter: Hofmeister, Frank

(56) Entgegenhaltungen:
- EP-A- 1 291 698
- DE-C1- 19 927 631
- US-A- 5 212 595
- PATENT ABSTRACTS OF JAPAN Bd. 010, Nr. 009 (P-420), 14. Januar 1986 (1986-01-14) & JP 60 165614 A (OLYMPUS KOGAKU KOGYO KK), 28. August 1985 (1985-08-28)

## Beschreibung

Die Erfindung betrifft eine Okulareinheit für Endoskope mit einem mindestens ein Linsensystem aufweisenden Okular, das axialverschiebbar in einer Okularfassung gelagert und in einer individuell einstellbaren Justierposition in der Okularfassung fixierbar ist, sowie mit einem mit einem Endoskopgehäuse verbindbaren Kopplungselement zur Aufnahme der Okularfassung, wobei die Okularfassung quer zur Längsachse der Okulareinheit verschiebbar im Kopplungselement gelagert ist und in einer individuell einstellbaren Justierposition im Kopplungselement fixierbar ist.

Derartige Okulareinheiten sind aus der Praxis in verschiedenen Ausgestaltungsformen bekannt. Um einerseits das Okular in Längsrichtung des optischen Systems in der Okularfassung zu justieren und andererseits die mit dem Okular bestückte Okularfassung im montierten Zustand im Kopplungselement in der Bildebene zu justieren, ist es aus der Praxis bekannt, die jeweilig in der Justierposition zu fixierenden Bauteile mittels Schrauben festzulegen. Diese Art der Justage hat sich zwar durchaus bewährt, jedoch besteht die Gefahr, dass sich aus den nach innen dringenden Gewinden feinste Späne oder dergleichen störende Partikel lösen und in die Okulareinheit gelangen. Darüber hinaus ist die Justage sehr kompliziert und zeitaufwändig.

Ein gattungsgemäßes endoskopisches System ist beispielsweise aus der EP 1 291 698 A2 bekannt. Bei diesem bekannten endoskopischen System bedarf es einer aufwändigen Konstruktion mit zwei Reihen ringförmig angeordneter Magneten, über die unter Zwischenschaltung zweier Stellringe die die optischen Bauelemente beinhaltende Hülse innerhalb des Gehäuses positionierbar ist.

Weiterhin ist aus der DE 199 27 631 C1 ist die Lagerung eines Okulars mittels Formschluss in einer Okularfassung bekannt. Diese bekannte Konstruktion ist jedoch konstruktiv sehr aufwändig, da es für die Anordnung der in dem Einsatz auszubildenden Aufnahmebohrung zur Aufnahme des Okulars sowie für die Fertigung der Außenwandkontur des Einsatzes der Ermittlung der notwendigen Raumkoordinaten bedarf und anhand dieser Raumkoordinaten der Einsatz so präzise gefertigt wird, dass das Okular und der Einsatz formschlüssig in die Endoskopoptik einsetzbar sind.

Davon ausgehend liegt der Erfindung die **Aufgabe** zugrunde, eine Okulareinheit für Endoskope zu schaffen, die eine einfache und schnelle Justage ermöglicht.

Die **Lösung** dieser Aufgabenstellung ist gemäß einer ersten Ausführungsform der Erfindung dadurch gekennzeichnet, dass das Okular zur Justage in Längsrichtung des optischen Systems mittels Klemm- und/oder Reibschluss schraubenfrei in der Okularfassung fixierbar ist, wobei im Inneren der als im Wesentlichen zylindrische Hülse ausgebildeten Okularfassung mindestens ein den Innerdurchmesser der Okularfassungreduzierendes Klemmelement angeordnet ist, welches im montierten Zustand eine radiale Klemmkraft bewirkend, mit dem in die Okularfassung eingesetzten Okular zusammenwirkt, sowie dadurch gekennzeichnet, dass die Okularfassung zur Justage in der Bildebene mittels Klemm- und/oder Reibschluss schraubenfrei im Kopplungselement fixierbar ist, wobei die Okularfassungüber einen Arretiermechanismus am Kopplungselement festlegbar ist und im Kopplungselement mindestens ein eine axiale Druckkraft erzeugendes Druckelement angeordnet ist, über das die mittels des Arretiermechanismus miteinander gekoppelten Endflächen der Okularfassung und des Kopplungselements gegeneinander pressbar sind.

Durch die erfindungsgemäße Vermeidung von Schrauben einerseits zum Fixieren des Okulars in der Justagestellung in der Okularfassung und andererseits zum Fixieren der Okularfassung in der Justagestellung im Kopplungselement besteht keine Gefahr mehr, dass Späne oder dergleichen Fremdstoffe während der Justage in die Okulareinheit gelangen.

Zum Erhalt der schraubenfreien Fixierung wird erfindungsgemäß vorgeschlagen, dass sowohl das Okular in der Okularfassung als auch die Okularfassung im Kopplungselement mittels Klemm- und/oder Reibschluss fixierbar sind. Durch reines flächiges Verklemmen der Bauteile zueinander werden die beiderseitigen Reibungskräfte so deutlich erhöht, dass das zu fixierende Bauteil auch ohne die Verwendung einer Schraube in der Justagestellung fixierbar ist.

Gemäß einer praktischen Ausführungsform der Erfindung wird zur Erzielung des Klemm- und/oder Reibschlusses vorgeschlagen, dass das den Innerdurchmesser der Okularfassung reduzierende Klemmelement als O-Ring ausgebildet ist.

Die **Lösung** dieser Aufgabenstellung ist gemäß einer zweiten Ausführungsform der Erfindung dadurch gekennzeichnet, dass das Okular zur Justage in Längsrichtung des optischen Systems mittels Klemm- und/oder Reibschluss schraubenfrei in der Okularfassung fixierbar ist, wobei die Okularfassung als im Wesentlichen zylindrische Spannhülse ausgebildet ist, die im montierten Zustand eine radiale Klemmkraft bewirkend das eingesetzte Okular klemmend umgreift, wobei der Außendurchmesser des Okulars geringfügig größer ist als der Innendurchmesser der Spannhülse, sowie dadurch gekennzeichnet, dass die Okularfassung zur Justage in der Bildebene mittels Klemm- und/oder Reibschluss schraubenfrei im Kopplungselement fixierbar ist, wobei die Okularfassung über einen Arretiermechanismus am Kopplungselement festlegbar ist und im Kopplungselement mindestens ein eine axiale Druckkraft erzeugendes Druckelement angeordnet ist, über das die mittels des Arretiermechanismus miteinander gekoppelten Endflächen der Okularfassung und des Kopplungselements gegeneinander pressbar sind.

Auch bei dieser Ausführungsform besteht durch die erfindungsgemäße Vermeidung von Schrauben einerseits zum Fixieren des Okulars in der Justagestellung in der Okularfassung und andererseits zum Fixieren der Okularfassung in der Justagestellung im Kopplungselement keine Gefahr mehr, dass Späne oder dergleichen Fremdstoffe während der Justage in die Okulareinheit gelangen.

Zum Erhalt der schraubenfreien Fixierung wird erfindungsgemäß vorgeschlagen, dass sowohl das Okular in der Okularfassung als auch die Okularfassung im Kopplungselement mittels Klemm- und/oder Reibschluss fixierbar sind. Durch reines flächiges Verklemmen der Bauteile zueinander werden die beiderseitigen Reibungskräfte so deutlich erhöht, dass das zu fixierende Bauteil auch ohne die Verwendung einer Schraube in der Justagestellung fixierbar ist.

Aufgrund der unterschiedlichen Durchmesser wird die als Spannhülse ausgebildete Okularfassung beim Einschieben des Okulars aufgeweitet und das Okular klemmend gehalten.

Zur Ausbildung der Okularfassung als Spannhülse weist diese erfindungsgemäß mindestens einen, vorzugsweise drei, in Axialrichtung der Okularfassung verhaufende Dehnungsschlitze auf. Diese Dehnungsschlitze ermöglichen das Einschieben des durchmessergrößeren Okulars in die Okularfassung.

Gemäß einer praktischen Ausführungsform der Erfindung wird vorgeschlagen, dass der Arretiermechanismus zum Verbinden der Okularfassung mit dem Kopplungselement als Bajonettverbindung ausgebildet ist. Die Ausbildung als Bajonettverbindung stellt eine einfach und schnell zu handhabende Verbindungsart dar, zu deren Ausbildung es keiner fein geschnittenen Gewindegänge wie bei einer klassischen Schraubverbindung bedarf.

Mit einer ersten praktischen Ausführungsform der Erfindung wird vorgeschlagen, dass das Druckelement als im Kopplungselement gelagerter O-Ring ausgebildet ist.

Gemäß einer alternativen Ausgestaltung der Erfindung ist das Druckelement als im Kopplungselement gelagertes Federelement ausgebildet, welches vorteilhafterweise zusätzlich als Längenausgleich bei thermischer und/oder mechanischer Belastung des Endoskops dienen kann.

Schließlich wird mit der Erfindung vorgeschlagen, dass die Bauteile Okular und Okularfassung einerseits und/oder Okularfassung und Kopplungselement andererseits in der jeweiligen Justierposition zusätzlich mittels eines Klebstoffes fixierbar sind, um auch bei stärkerer mechanischer Belastung der Okulareinheit ein unbeabsichtigtes Verstellen der Bauteile zu verhindern.

Weitere Merkmale und Vorteile der Erfindung ergeben sich anhand der zugehörigen Zeichnung, in der zwei Ausführungsbeispiele einer erfindungsgemäßen Okulareinheit für Endoskope nur beispielhaft dargestellt sind. In der Zeichnung zeigt:
- Fig. 1: eine perspektivische Ansicht einer ersten Ausführungsform einer erfindungsgemäßen Okulareinheit für Endoskope im demontierten Zustand;
- Fig. 2: eine perspektivische Ansicht der Okulareinheit gemäß Fig. 1 im montierten Zustand;
- Fig. 3: einen Längsschnitt durch die Okulareinheit gemäß Fig. 2 und
- Fig. 4: einen Längsschnitt durch eine zweite Ausführungsform einer erfindungsgemäßen Okulareinheit für Endoskope.

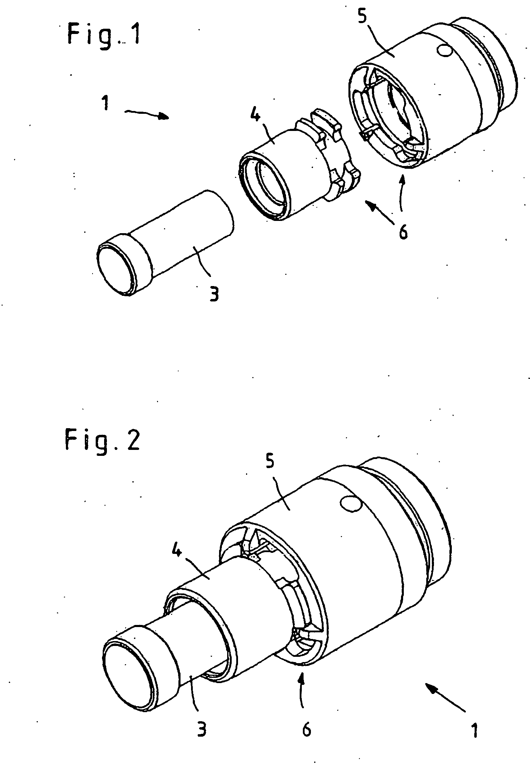

Die in den Abbildungen Fig. 1 bis Fig. 4 dargestellten Okulareinheiten 1 für Endoskope bestehen im Wesentlichen aus einem mindestens ein Linsensystem 2 aufweisenden Okular 3, das axialverschiebbar in einer Okularfassung 4 gelagert ist, sowie einem mit einem Endoskopgehäuse verbindbaren Kopplungselement 5 zur Aufnahme der Okularfassung 4.

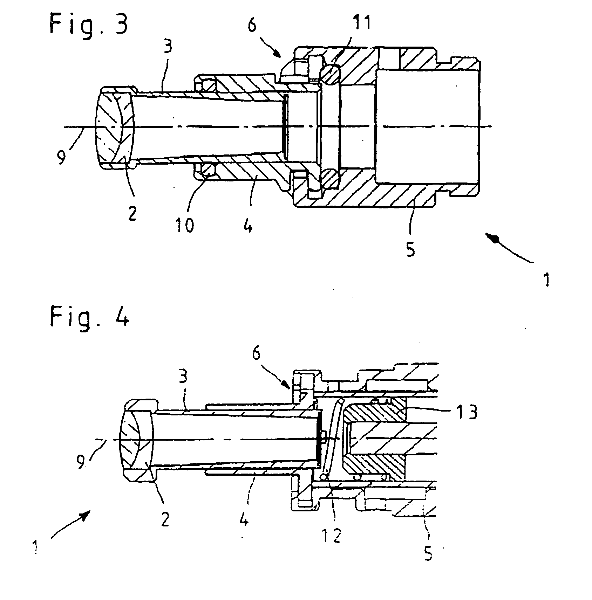

Wie insbesondere aus den Abbildungen Fig. 3 und 4 ersichtlich, ist die Okularfassung 4 als im Wesentlichen zylindrische Hülse ausgebildet, in die das ebenfalls zylindrisch ausgebildete Okular 3 einschiebbar ist.

Das Festlegen der Okularfassung 4 im Kopplungselement 5 erfolgt über einen Arretiermechanismus, der bei den in Fig. 1 bis Fig. 4 dargestellten beiden Ausführungsformen als Bajonettverbindung 6 ausgebildet ist.

Nach dem Einfügen des Okulars 3 in die Okularfassung 4 sowie dem Verbinden der Okularfassung 4 mit dem Kopplungselement 5 über den Arretiermechanismus ist es erforderlich, die Okulareinheit 1 zu justieren. Die Justage des Okulars 3 in Längsrichtung des optischen Systems erfolgt durch manuelles Verschieben des Okulars in der Okularfassung 4. Die Justage in der Bildebene erfolgt durch Verschieben der Okularfassung 4 im Kopplungselement 5 quer zur Längsachse 9 der Okulareinheit 1.

Um zu verhindern, dass die zueinander justierten Bauteile bei der Handhabung des Endoskops wieder verstellt werden, ist es notwendig, die Bauteile in der jeweiligen Justagestellung zueinander zu fixieren.

Bei der in Fig. 1 bis 3 dargestellten ersten Ausführungsform erfolgt das Fixieren des Okulars 3 innerhalb der Okularfassung 4 über ein den Innendurchmesser der Okularfassung 4 reduzierendes Klemmelement, welches bei der dargestellten Ausführungsform als O-Ring 10 ausgebildet ist. Der vorzugsweise aus einem GummiMaterial bestehende verformbare O-Ring 10 wird beim Einschieben des Okulars 3 in die Okularfassung 4 zusammengedrückt und bewirkt eine radiale Klemmkraft auf das Okular 3. Durch diese Klemmkraft sowie die Reibungskräfte zwischen dem O-Ring 10 und der Außenfläche des Okulars 3 wird das Okular 3 in der justierten Lage innerhalb der Okularfassung 4 fixiert.

Eine alternative Art der Fixierung des Okulars 3 in der Okularfassung 4 ist in der Abbildung Fig. 4 dargestellt. Bei dieser Ausführungsform ist die Okularfassung 4 als Spannhülse ausgebildet, die im montierten Zustand das eingesetzte Okular 3 klemmend umgreift, wobei der Außendurchmesser des Okulars 3 geringfügig größer ist als der Innendurchmesser der Spannhülse. Zur Ausbildung der Okularfassung 4 als Spannhülse weist diese mindestens einen, vorzugsweise drei, in Axialrichtung der Okularfassung 4 verlaufende Dehnungsschlitze auf. Beim Einschieben des durchmessergrößeren Okulars 3 in die Okularfassung 4 weiten sich diese Dehnungsschlitze und ermöglichen die Aufnahme des Okulars 3.

Bezeichnend für alle Ausführungsformen ist, dass das Fixieren des Okulars 3 in der Justagestellung innerhalb der Okularfassung 4 schraubenfrei allein durch Klemm- und/oder Reibschluss erfolgt. Diese Art der Fixierung hat den Vorteil gegenüber den aus dem Stand der Technik bekannten Fixierschrauben mit nach innen führenden Gewinden, dass kein Materialabrieb, wie beispielsweise Gewindespäne, ins Innere der Okulareinheit 1 gelangen kann.

Um die Justagestellung auch gegenüber groben mechanischen Belastungen zu fixieren, ist es zusätzlich möglich, beispielsweise im Bereich des O-Rings 10 oder der Dehnungsschlitze, Klebstoff auf die Verbindungsstellen aufzubringen.

Auch im Bereich der Lagerung der Okularfassung 4 im Kopplungselement 5 ist es erforderlich, die Bauteile in der jeweiligen Justagestellung zueinander zu fixieren.

Bei allen dargestellten Ausführungsformen erfolgt das Fixieren der Okularfassung 4 im Kopplungselement 5 über ein im Kopplungselement 5 angeordnetes Druckelement, über das die mittels des Arretiermechanismus miteinander gekoppelten Endflächen der Okularfassung 4 und des Kopplungselements 5 gegeneinander gepresst werden.

Dieses Druckelement ist bei der in den Abbildungen Fig. 1 bis 3 dargestellten ersten Ausführungsform als im Kopplungselement 5 gelagerter O-Ring 11 ausgebildet. Zum Verbinden der Okularfassung 4 mit dem Kopplungselement 5 werden bei dieser Ausgestaltungsform die beiden miteinander zu verbindenden Bauteile 4 und 5 gegeneinander gesetzt und unter Aufbringung einer axialen Druckkraft gegeneinander verdreht, bis sich die die Bajonettverbindung 6 bildenden Endflächen der Bauteile 4 und 5 hintergreifen. Die axiale Druckkraft ist notwendig, um den O-Ring 11 zusammenzudrücken.

Wie aus den Schnittdarstellungen gemäß Fig. 3 und 4 ersichtlich, weist die Okularfassung 4 im montierten Zustand immer ausreichen radiales Spiel auf, um zur Justage quer zur Längsachse 9 der Okulareinheit 1 im Kopplungselement 5 verschoben werden zu können.

Das Zusammendrücken des O-Rings 11 bewirkt, dass über den sich wieder ausdehnenden O-Ring 11 die mittels des Arretiermechanismus miteinander gekoppelten Endflächen der Okularfassung 4 und des Kopplungselements 5 gegeneinander gepresst werden. Durch diese Klemmkraft sowie die Reibungskräfte zwischen den aneinander anliegenden Endflächen wird die Okularfassung 4 in der justierten Lage innerhalb des Kopplungselements 5 fixiert.

Eine alternative Art der Fixierung der Okularfassung 4 im Kopplungselement 5 ist in der Abbildung Fig. 4 dargestellt. Bei dieser Ausführungsform ist das Druckelement als im Kopplungselement 5 gelagertes Federelement 12 ausgebildet.

Bei der in Fig. 4 dargestellten zweiten Ausführungsform werden zum Verbinden der Okularfassung 4 mit dem Kopplungselement 5 die beiden miteinander zu verbindenden Bauteile 4 und 5 gegeneinander gesetzt und unter Aufbringung einer axialen Druckkraft gegeneinander verdreht, bis sich die die Bajonettverbindung 6 bildenden Endflächen der Bauteile 4 und 5 hintergreifen. Die axiale Druckkraft ist notwendig, um das Federelement 12 zusammenzudrücken.

Das Zusammendrücken des Federelements 12 bewirkt, dass über die Federspannung des Federelements 12 die mittels des Arretiermechanismus miteinander gekoppelten Endflächen der Okularfassung 4 und des Kopplungselements 5 gegeneinander gepresst werden. Durch diese Klemmkraft sowie die Reibungskräfte zwischen den aneinander anliegenden Endflächen wird die Okularfassung 4 in der justierten Lage innerhalb des Kopplungselements 5 fixiert.

Auch das Fixieren der Okularfassung 4 in der Justagestellung innerhalb des Kopplungselements 5 erfolgt schraubenfrei allein durch Klemm- und/oder Reibschluss.

Um auch diese Justagestellung gegenüber groben mechanischen Belastungen zu fixieren, ist es zusätzlich möglich, auf die Verbindungsstellen Klebstoff aufzubringen.

Zusätzlich zu der Erzeugung der die Bauteile 4 und 5 in der Justagestellung fixierenden Druckkraft dient das Federelement 12 im Zusammenwirken mit einer im Kopplungselement 5 gelagerten Führung 13 gleichzeitig als Längenausgleich bei thermischer und/oder mechanischer Beanspruchung des Endoskops.

### Bezugszeichenliste

- 1: Okulareinheit
- 2: Linsensystem
- 3: Okular
- 4: Okularfassung
- 5: Kopplungselement
- 6: Bajonettverbindung

- 9: Längsachse
- 10: O-Ring
- 11: O-Ring
- 12: Federelement
- 13: Führung

## Patentansprüche

1. Okulareinheit für Endoskope mit einem mindestens ein Linsensystem (2) aufweisenden Okular (3), das axialverschiebbar in einer Okularfassung (4) gelagert und in einer individuell einstellbaren Justierposition in der Okularfassung (4) fixierbar ist, sowie mit einem mit einem Endoskopgehäuse verbindbaren Kopplungselement (5) zur Aufnahme der Okularfassung (4), wobei die Okularfassung (4) quer zur Längsachse (9) der Okulareinheit verschiebbar im Kopplungselement (5) gelagert ist und in einer individuell einstellbaren Justierposition im Kopplungselement (5) fixierbar ist,
**dadurch gekennzeichnet,**
**dass** das Okular (3) zur Justage in Längsrichtung des optischen Systems mittels Klemm- und/oder Reibschluss schraubenfrei in der Okularfassung (4) fixierbar ist, wobei im Inneren der als im Wesentlichen zylindrische Hülse ausgebildeten Okularfassung (4) mindestens ein den Innerdurchmesser der Okularfassung (4) reduzierendes Klemmelement angeordnet ist, welches im montierten Zustand eine radiale Klemmkraft bewirkend, mit dem in die Okularfassung (4) eingesetzten Okular (3) zusammenwirkt, sowie **dadurch gekennzeichnet, dass** die Okularfassung (4) zur Justage in der Bildebene mittels Klemm- und/oder Reibschluss schraubenfrei im Kopplungselement (5) fixierbar ist, wobei die Okularfassung in montiertem Zustand zur Justage quer zur Längsachse radiales Spiel aufweist und wobei die Okularfassung (4) über einen Arretiermechanismus am Kopplungselement (5) festlegbar ist und im Kopplungselement (5) mindestens ein eine axiale Druckkraft erzeugendes Druckelement angeordnet ist, über das die mittels des Arretiermechanismus miteinander gekoppelten Endflächen der Okularfassung (4) und des Kopplungselements (5) gegeneinander pressbar sind.

2. Okulareinheit nach Anspruch 1, **dadurch gekennzeichnet, dass** das mindestens eine Klemmelement als O-Ring (10) ausgebildet ist.

3. Okulareinheit für Endoskope mit einem mindestens ein Linsensystem (2) aufweisenden Okular (3), das axialverschiebbar in einer Okularfassung (4) gelagert und in einer individuell einstellbaren Justierposition in der Okularfassung (4) fixierbar ist, sowie mit einem mit einem Endoskopgehäuse verbindbaren Kopplungselement (5) zur Aufnahme der Okularfassung (4), wobei die Okularfassung (4) quer zur Längsachse (9) der Okulareinheit verschiebbar im Kopplungselement (5) gelagert ist und in einer individuell einstellbaren Justierposition im Kopplungselement (5) fixierbar ist,
**dadurch gekennzeichnet,**
**dass** das Okular (3) zur Justage in Längsrichtung des optischen Systems mittels Klemm- und/oder Reibschluss schraubenfrei in der Okularfassung (4) fixierbar ist, wobei die Okularfassung (4) als im Wesentlichen zylindrische Spannhülse ausgebildet ist, die im montierten Zustand eine radiale Klemmkraft bewirkend das eingesetzte Okular (3) klemmend umgreift, wobei der Außendurchmesser des Okulars (3) geringfügig größer ist als der Innendurchmesser der Spannhülse, sowie **dadurch gekennzeichnet, dass** die Okularfassung (4) zur Justage in der Bildebene mittels Klemm- und/oder Reibschluss schraubenfrei im Kopplungselement (5) fixierbar ist, wobei siehe Anspruch 1 die Okularfassung (4) über einen Arretiermechanismus am Kopplungselement (5) festlegbar ist und im Kopplungselement (5) mindestens ein eine axiale Druckkraft erzeugendes Druckelement angeordnet ist, über das die mittels des Arretiermechanismus miteinander gekoppelten Endflächen der Okularfassung (4) und des Kopplungselements (5) gegeneinander pressbar sind.

4. Okulareinheit nach Anspruch 3, **dadurch gekennzeichnet, dass** die Okularfassung (4) zur Ausbildung als Spannhülse mindestens einen, vorzugsweise drei, in Axialrichtung der Okularfassung (4) verlaufende Dehnungsschlitze aufweist.

5. Okulareinheit nach einem der Ansprüche 1 bis 4, **dadurch gekennzeichnet, dass** der Arretiermechanismus als Bajonettverbindung (6) ausgebildet ist.

6. Okulareinheit nach einem der Ansprüche 1 bis 5, **dadurch gekennzeichnet, dass** das mindestens eine Druckelement als im Kopplungselement (5) gelagerter O-Ring (11) ausgebildet ist.

7. Okulareinheit nach einem der Ansprüche 1 bis 5, **dadurch gekennzeichnet, dass** das mindestens eine Druckelement als im Kopplungselement (5) gelagertes Federelement (12) ausgebildet ist.

8. Okulareinheit nach Anspruch 7, **dadurch gekennzeichnet, dass** das Federelement (12) zusätzlich zum Ausgleich thermischer und mechanischer Längenänderungen dient.

9. Okulareinheit nach einem der Ansprüche 1 bis 8, **dadurch gekennzeichnet, dass** die Bauteile Okular (3) und Okularfassung (4) einerseits und/oder Okularfassung (4) und Kopplungselement (5) andererseits in der jeweiligen Justierposition zusätzlich mittels eines Klebstoffes fixierbar sind.

## Claims

1. Eyepiece unit for endoscopes with an eyepiece (3) which is mounted in an eyepiece frame (4) such that it can be displaced along the axis and can be fixed in an individually adjustable adjustment position in the eyepiece frame (4) and has at least one lens system (2) and with a coupling element (5) which can be connected to an endoscope housing and holds the eyepiece frame (4), wherein the eyepiece frame (4) is mounted in the coupling element (5) such that it can be displaced transversely with respect to the longitudinal axis (9) of the eyepiece unit and can be fixed in an individually adjustable adjustment position in the coupling element (5),
**characterized**
**in that** the eyepiece (3) can be fixed without screws by means of a clamping and/or frictional fit in the eyepiece frame (4) for adjustment along the longitudinal direction of the optical system, wherein at least one clamping element reducing the internal diameter of the ocular frame (4) is arranged in the interior of the ocular frame (4) which is substantially formed as a cylindrical sleeve, which clamping element in the fitted state interacts with the eyepiece (3) used in the eyepiece frame (4) whilst effecting a radial clamping force, and **characterized in that** the eyepiece frame (4) can be fixed without screws by means of a clamping and/or frictional fit in the coupling element (5) for adjustment in the image plane, wherein the eyepiece frame (4) has radial play in the fitted state for adjustment which is transverse with respect to the longitudinal axis, and wherein the eyepiece frame (4) can be fixed on the coupling element (5) by means of a stopping mechanism and at least one pressure element generating axial pressure is arranged in the coupling element (5), by means of which pressure element the end faces of the eyepiece frame (4) and the coupling element (5) which are coupled to one another by means of the stopping mechanism can be pressed against each other.

2. Eyepiece unit according to Claim 1, **characterized in that** the at least one clamping element is designed as an 0-ring (10).

3. Eyepiece unit for endoscopes with an eyepiece (3) which is mounted in an eyepiece frame (4) such that it can be displaced along the axis and can be fixed in an individually adjustable adjustment position in the eyepiece frame (4) and has at least one lens system (2) and with a coupling element (5) which can be connected to an endoscope housing and holds the eyepiece frame (4), wherein the eyepiece frame (4) is mounted in the coupling element (5) such that it can be displaced transversely with respect to the longitudinal axis (9) of the eyepiece unit and can be fixed in an individually adjustable adjustment position in the coupling element (5),
**characterized**
**in that** the eyepiece (3) can be fixed without screws by means of a clamping and/or frictional fit in the eyepiece frame (4) for adjustment along the longitudinal direction of the optical system, wherein the ocular frame (4) is designed as a substantially cylindrical adapter sleeve which in the fitted state engages around the used eyepiece (3) in a clamping fashion, effecting a radial clamping force, wherein the external diameter of the eyepiece (3) is slightly larger than the internal diameter of the adapter sleeve, and **characterized in that** the eyepiece frame (4) can be fixed without screws by means of a clamping and/or frictional fit in the coupling element (5) for adjustment in the image plane, wherein the eyepiece frame (4) has radial play in the fitted state for adjustment which is transverse with respect to the longitudinal axis, and wherein the eyepiece frame (4) can be fixed on the coupling element (5) by means of a stopping mechanism and at least one pressure element generating axial pressure is arranged in the coupling element (5), by means of which pressure element the end faces of the eyepiece frame (4) and the coupling element (5) which are coupled to one another by means of the stopping mechanism can be pressed against each other.

4. Eyepiece unit according to Claim 3, **characterized in that** the eyepiece frame (4) has at least one, preferably three, expansion slots running in the axial direction of the eyepiece frame (4) for forming the adapter sleeve.

5. Eyepiece unit according to one of Claims 1 to 4, **characterized in that** the stopping mechanism is designed as a bayonet connection (6).

6. Eyepiece unit according to one of Claims 1 to 5, **characterized in that** the at least one pressure element is designed as an O-ring (11) mounted in the coupling element (5).

7. Eyepiece unit according to one of Claims 1 to 5, **characterized in that** the at least one pressure element is designed as a spring element (12) mounted in the coupling element (5).

8. Eyepiece unit according to Claim 7, **characterized in that** the spring element (12) is additionally used to compensate for thermal and mechanical changes in length.

9. Eyepiece unit according to one of Claims 1 to 8, **characterized in that** the eyepiece (3) and eyepiece frame (4) components on the one hand and/or eyepiece frame (4) and coupling element (5) on the other hand can additionally be fixed in the respective adjustment position by means of an adhesive.

## Revendications

1. Unité d'oculaire pour endoscope avec un oculaire (3) comportant au moins un système de lentilles (2), qui est monté de manière axialement déplaçable dans une monture d'oculaire (4) qui est fixable dans la monture d'oculaire (4) dans une position d'ajustage réglable individuellement, ainsi qu'avec un élément de couplage (5) pouvant être relié à un boîtier d'endoscope pour recevoir la monture d'oculaire (4) où la monture d'oculaire (4) est montée dans l'élément de couplage (5) de manière déplaçable transversalement à l'axe longitudinal (9) de l'unité d'oculaire et est fixable dans l'élément de couplage (5) dans une position d'ajustage réglable individuellement, **caractérisée en ce que** l'oculaire (3) est fixable pour l'ajustage dans la direction longitudinale du système optique par assemblage par serrage et/ou frottement sans vis dans la monture d'oculaire (4) où à l'intérieur de la monture d'oculaire (4) agencée sensiblement sous forme de douille cylindrique est disposé au moins un élément de serrage réduisant le diamètre interne de la monture d'oculaire (4) qui, produisant à l'état monté une force de serrage radiale, coopère avec l'oculaire (3) inséré dans la monture d'oculaire (4), et **caractérisée en ce que** la monture d'oculaire (4) est fixable pour l'ajustage dans le plan de l'image par assemblage par serrage et/ou frottement sans vis dans l'élément de couplage (5), où la monture d'oculaire présente à l'état monté pour l'ajustage un jeu radial transversalement à l'axe longitudinal et où la monture d'oculaire (4) peut être fixée sur l'élément de couplage (5) par le biais d'un mécanisme d'arrêt et au moins un élément de pression produisant une force de pression axiale est disposé dans l'élément de couplage (5), élément de pression par le biais duquel les surfaces terminales de la monture d'oculaire (4) et de l'élément de couplage (5) couplées entre elles au moyen du mécanisme d'arrêt peuvent être pressées l'une contre l'autre.

2. Unité d'oculaire selon la revendication 1 **caractérisée en ce que** le au moins un élément de serrage est agencé sous forme de joint torique (10).

3. Unité d'oculaire pour endoscope avec un oculaire (3) comportant au moins un système de lentilles (2), qui est monté de manière axialement déplaçable dans une monture d'oculaire (4) et qui est fixable dans la monture d'oculaire (4) dans une position d'ajustage réglable individuellement, ainsi qu'avec un élément de couplage (5) pouvant être relié à un boîtier d'endoscope pour recevoir la monture d'oculaire (4), où la monture d'oculaire (4) est montée dans l'élément de couplage (5) de manière déplaçable transversalement à l'axe longitudinal (9) de l'unité d'oculaire et est fixable dans l'élément de couplage (5) dans une position d'ajustage réglable individuellement, **caractérisée en ce que** l'oculaire (3) est fixable pour l'ajustage dans la direction longitudinale du système optique par assemblage par serrage et/ou frottement sans vis dans la monture d'oculaire (4), où la monture d'oculaire (4) est agencée sous forme d'une douille de tension sensiblement cylindrique qui, produisant à l'état monté une force de serrage radiale, entoure par serrage l'oculaire (3) inséré, où le diamètre externe de l'oculaire (3) est légèrement supérieur au diamètre interne de la douille de tension, et **caractérisée en ce que** la monture d'oculaire (4) pour l'ajustage dans le plan de l'image est fixable par assemblage par serrage et/ou frottement sans vis dans l'élément de couplage (5), où la monture d'oculaire présente à l'état monté pour l'ajustage un jeu radial transversalement à l'axe longitudinal et où la monture d'oculaire (4) peut être fixée sur l'élément de couplage (5) par le biais d'un mécanisme d'arrêt et au moins un élément de pression produisant une force de pression axiale est disposé dans l'élément de couplage (5), élément de pression par le biais duquel les surfaces terminales de la monture d'oculaire (4) et de l'élément de couplage (5) couplées entre elles au moyen du mécanisme d'arrêt peuvent être pressées l'une contre l'autre.

4. Unité d'oculaire selon la revendication 3, **caractérisée en ce que** la monture d'oculaire (4) comporte pour l'agencement sous forme de douille de tension au moins une, de préférence trois, fentes d'extension qui s'étendent dans la direction axiale de la monture d'oculaire (4).

5. Unité d'oculaire selon l'une des revendications 1 à 4 **caractérisée en ce que** le mécanisme d'arrêt est agencé sous forme de liaison à baïonnette (6).

6. Unité d'oculaire selon l'une des revendications 1 à 5 **caractérisée en ce que** le au moins un élément de pression est agencé sous forme de joint torique (11) monté dans l'élément de couplage (5).

7. Unité d'oculaire selon l'une des revendications 1 à 5 **caractérisée en ce que** le au moins un élément de pression est agencé sous forme d'élément à ressort (12) monté dans l'élément de couplage (5).

8. Unité d'oculaire selon la revendication 7 **caractérisée en ce que** l'élément à ressort (12) sert en outre à compenser les variations de longueur thermiques et mécaniques.

9. Unité d'oculaire selon l'une des revendications 1 à 8 **caractérisée en ce que** les éléments constitutifs oculaire (3) et monture d'oculaire (4) d'une part et/ou monture d'oculaire (4) et élément de couplage (5) d'autre part sont fixables en outre dans la position d'ajustage correspondante au moyen d'un adhésif.
